# EUROPEAN PATENT APPLICATION

(11) **EP 3 244 494 A1**
(43) Date of publication of application: **15.11.2017**
(21) Application number: 17170723.5
(22) Date of filing: 11.05.2017
(51) Int. Cl.: H01R 24/78, H01R 25/00, H02G 3/08, H01R 13/627, H01R 13/74, H01R 31/02

(54) **POWER SOCKET ASSEMBLY**

(30) Priority: 13.05.2016 GB 201608458; 10.05.2017 GB 201707520
(71) Applicant: BCA Leisure Limited, Halifax, West Yorkshire HX5 9HF (GB)
(72) Inventor: BATIST, Wim JM, Halifax, West Yorkshire HX5 9HF (GB)
(74) Representative: Appleyard Lees IP LLP

(57) **Abstract**

A power socket assembly for use in mobile home. The assembly comprises a power socket unit (22, 22a, 22b) provided with a device socket (60) for receiving a plug for electrical connection to an electrical device, and an electrical connector (42) for making connection with a supply electrical connector (16) of compatible design to thereby connect the power socket unit (22, 22a, 22b) to an electrical supply (10).

## Description

The present disclosure relates to a power socket assembly.

In particular the present disclosure is concerned with a power socket assembly for a mobile home, or the like.

### Background

Modern caravans, camper vans and other mobile home structures have a multitude of power points to supply a user with electricity for electrical devices, such as televisions, kettles, computers and mobile phones etc. As users demands has risen for more electrical devices, so has the need for a larger number of power sockets.

During manufacture of a mobile home, a wiring loom for electrical features may be provided before the positioning and fixing of wall panels. With the walls in place, wires from the loom are laid up in the desired location and then hard wired into power sockets. The sockets are then attached to the walls of the structure.

With an increased demand for power sockets, the manufacturer of the mobile home is faced with a complex wiring arrangement. Modern standards require that any hard wiring is completed by a qualified electrician during the manufacture. Additionally wiring up all the sockets is relatively time consuming. Thus cost and time of manufacture is increased.

It is also common for sockets to be attached in series. Conventionally this is achieved by using a first socket with an integrally formed doubler socket that a second socket in the series may be hard wired to. This adds further complexity for a manufacturer, as it means that the parts list must include doubler sockets and non doubler sockets, and these must be ordered in the correct quantity. Doubler sockets inherently have integral wiring formed in the moulding of the socket which makes manufacture more complex, and hence expensive.

Hence a power socket assembly which obviates the need for multiple socket types and also obviates the need for a use of an electrician during the assembly of mobile home circuit, is highly desirable.

### Summary

According to the present disclosure there is provided an apparatus as set forth in the appended claims. Other features of the invention will be apparent from the dependent claims, and the description which follows.

Accordingly there may be provided a power socket assembly for use in mobile home comprising a power socket unit 22, 22a, 22b provided with : a device socket 60 for receiving a plug for electrical connection to an electrical device; an electrical connector 42 for making connection with a supply electrical connector 16 of compatible design to thereby connect the power socket unit 22, 22a, 22b to an electrical supply 10; the power socket unit electrical connector 42 being configured to mate with the supply electrical connector 16.

The power socket assembly may further comprise a doubler unit 24 having : a doubler unit electrical connector 40 compatible with the power socket unit electrical connector 42, the doubler unit electrical connector 40 being configured to mate with the power socket unit electrical connector 42; a doubler unit electrical supply connector 44 for mating with the supply electrical connector 16; and a doubler unit electrical spur connector 46, for electrical connection with the power socket unit connector 42 of a further power socket unit 22b.

The doubler unit electrical connector 40 may further comprise a first locking member 82; the power socket unit electrical connector 42 comprises a second locking member 80 different to, but compatible with the first locking member 82; and the first locking member 82 and second locking member 80 are configured to co-operatively engage and thereby hold the doubler unit electrical connector 40 and the power socket unit electrical connector 42 together.

The doubler unit electrical supply connector 44 may comprise a further second locking member 80; and the supply electrical connector 16 comprises a further first locking member 82 different to, but compatible with the second locking member 80; and the first locking member 82 and second locking member 80 are configured to co-operatively engage and thereby hold the doubler unit electrical supply connector 44 and the supply electrical connector 16 together.

The power socket assembly may further comprise a cable spur connector assembly 32 comprising : a cable 33 with a cable spur connector 48, 50 at either end, one of the cable spur connectors 48 configured to mate with the doubler unit electrical spur connector 46; the other cable spur connector 50 configured to mate with the power socket unit connector 42 of the further power socket unit 22b, to thereby provide an electrical connection between the power socket units 22a, 22b.

The doubler unit electrical spur connector 46 may comprise an additional first locking member 82; and the cable spur connector 48 comprises an additional second locking member 80 different to, but compatible with the first locking member 82; and the first locking member 82 and second locking member 80 are configured to co-operatively engage and thereby hold the doubler unit electrical spur connector 46 and the cable spur connector 48 together.

The power socket units 22a, 22b may be of substantially the same design.

An electrical cable 12 may provide an electrical connection between the supply electrical connector 16 and the electrical supply 10.

The power socket unit 22, 22a, 22b may further comprise : a frame 70 which surrounds the device socket 60 for fixing the power socket unit 22, 22a, 22b to a wall 18; the power socket unit electrical connector 42 extends away from the body of the power socket unit 22, 22a, 22b from a position offset from the frame 70 by a distance greater than the thickness of the wall 18.

The power socket assembly may further comprise an anchor feature 51 provided on the power socket unit 22, 22a, 22b; a cover 55 having an arm 53 with a slot 57 for detachable engagement with the anchor feature 51, to thereby hold the cover 55 onto the power socket unit 22, 22a, 22b.

The power socket assembly may further comprise an anchor feature 83 provided on the power socket unit 22, 22a, 22b; a cover 55 with a mounting region 90; and a fixing means 88 provided between the anchor feature 83 and mounting region 90 to thereby hold the cover 55 onto the power socket unit 22, 22a, 22b.

There may also be provided a power supply system comprising a power socket unit 22a provided with : a device socket 60 for receiving a plug for electrical connection to an electrical device; and an electrical connector 42; a doubler unit 24 having : a doubler unit electrical connector 40 compatible with the power socket unit electrical connector 42, the doubler unit electrical connector 40 being configured to mate with the power socket unit electrical connector 42; a doubler unit electrical supply connector 44 for making connection with a supply electrical connector 16 of compatible design to thereby connect the power socket unit 22a to an electrical supply 10 via the doubler unit 24; a doubler unit electrical spur connector 46 for electrical connection with the power socket unit connector 42 of a further power socket unit 22b; and thereby connecting the further power socket unit 22b to the electrical supply 10 via the doubler unit 24; a cable spur connector assembly 32 comprising : a cable with a cable spur connector 48, 50 at either end, the cable spur connectors 48, 50 configured to mate with the doubler unit electrical spur connector 46 and the power socket unit connector 42 of the further power socket unit 22b; to thereby provide an electrical connection between the power socket units 22a, 22b.

There may also be provided a power supply system comprising : a first power socket unit 22a; a second power socket unit 22b a doubler unit 24; and a cable spur connector assembly 32; the first power socket unit 22a and second power socket unit 22b being of substantially the same design; the doubler unit 24 being coupled directly with the first power socket unit 22a via a doubler unit electrical connector 40 provided on the doubler unit 24 configured to connect to a compatible power unit electrical connector 42 on the first power socket unit 22a; the first power socket unit 22a being in in electrical communication with an electrical power source 10 via a doubler unit electrical supply connector 44 on the doubler unit 24 connected to a compatible connector 16 on a cable 12 in electrical connection with the power source 10; and the doubler unit 24 being in electrical connection with the second power unit 22b via a doubler unit electrical spur connector 46 on the doubler unit 24 connected to a compatible connector 48 on the cable spur assembly 32, and a further compatible connector 50 on the cable spur assembly 32 mated with a power socket unit connector 42 provided on the second power unit 22b.

Hence there is provided a power socket assembly and power supply system for use in a mobile home which reduces the number of types of power sockets required, simplifies the power socket design, and also obviates the need for an electrician during assembly of the system in a mobile home. This provides faster assembly times and reduces the overall cost of manufacture. It also provides for a very flexible system which may be changed and adapted as required easily, and without the need of an electrician.

### Brief Description of the Drawings

Examples of the present disclosure will now be described with reference to the accompanying drawings, in which:
Figure 1 shows a diagrammatic representation of part of a system of the present disclosure;
Figure 2 shows an example of an assembled system according to the present disclosure;
Figure 3 shows an isometric rear view of a power socket assembly according to the present disclosure;
Figure 4 shows a front view of the power socket assembly shown in Figure 3;
Figure 5 shows a similar arrangement to that of Figure 3 from a different angle;
Figure 6 shows a side view of part of the arrangement of Figure 5;
Figure 7 show a similar view to that of Figures 3, 5 with a line indicating where a back cover may be provided;
Figure 8 shows the back cover indicated in Figure 7;
Figure 9 shows the power socket assembly with the cover of Figure 8 fitted to the socket of Figure 7;
Figure 10 shows an alternative example to that shown Figure 7, without a back cover;
Figure 11 shows the example of Figure 10 with an alternative example to that shown Figure 7, with a back cover fitted;
Figure 12 shows a side view of a power socket unit according to the present disclosure;
Figure 13 shows a doubler unit according to the present disclosure, for mating with the power socket unit of Figure 12;
Figure 14 shows an assembly of the power socket unit and doubler unit of Figures 12, 13;
Figure 15 shows part of a supply cable assembly according to the present disclosure;
Figure 16 shows part of a cable spur connector assembly according to the present disclosure; and
Figure 17 shows an assembly of the power socket unit, doubler unit and cable spur connector shown in Figures 12 to 16.

### Detailed Description

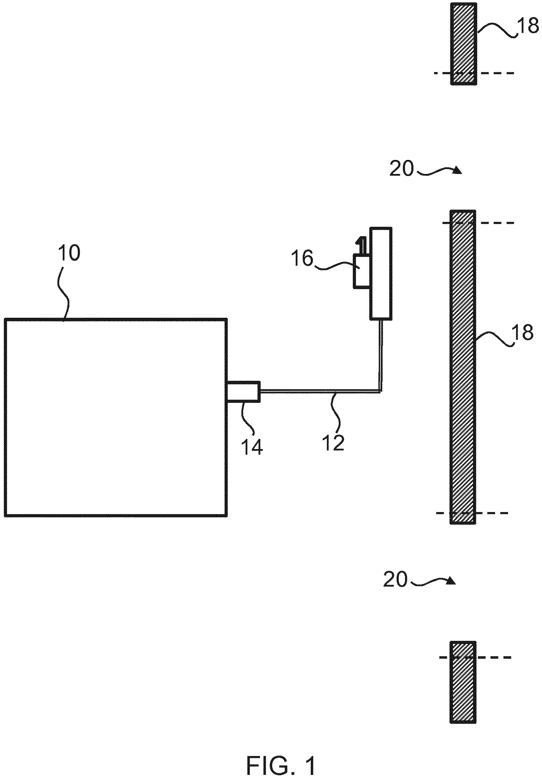

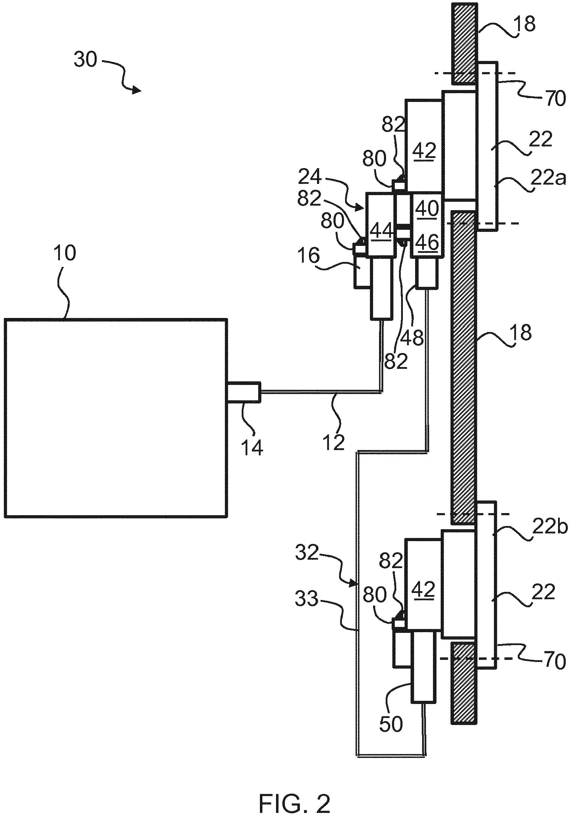

Figure 1 shows a precursor to a power supply system for a mobile home according to the present disclosure, and Figure 2 shows an example layout of a power supply system according to the present disclosure. Figure 1 shows a power source 10 with a supply cable 12 leading away from the power source 10.

The supply cable 12 is linked to the power source 10 by a clip fit connector 14. The power supply cable 12 terminates in a further clip fit connector 16. The electrical cable 12 provides an electrical connection between the supply electrical connector 16 and the electrical supply 10. The electrical connectors 14, 16 (and subsequent connectors described below) may be of any conventional kind which allow for the connectors to mate and be removeably fixed in position and fixed relative to one another. That is to say, respective connectors are configured so that they may be locked relative to one another, and also non-destructively separated and re-used as required. Further examples are provided below.

In practice the power source 10 may be a consumer unit, which is in turn may be connected to an electrical supply inside or outside of the mobile home or caravan. In the example shown, there is only one supply cable 12, but in practice there will be a plurality of supply cables 12 extending from the consumer unit 10 to different locations in the structure of the mobile home. The structure of the mobile home comprises wall panels 18, one of which is shown in Figure 1. The wall panels 18 are provided with orifices 20 for receiving power socket units 22 (shown as units 22a, 22b) according to the present disclosure. The power socket units 22a, 22b may be of substantially the same design.

As shown in Figure 2, the rest of the power socket assembly may then be installed. A fitter will extend the power supply cable 12 and connector 16 through one of the wall orifices 20 and may connect the connector either directly, or indirectly, with a power socket unit 22. The power supply cable 12 may be attached to the power socket unit 22 either directly via the connector 16 or indirectly via a doubler unit 24. The features of this arrangement will be described in more detail below.

The power socket unit 22 may then be adhered, screwed or otherwise fixed to the wall panel 18.

Hence the power supply system 30 shown in Figure 2 comprises a first power socket unit 22a, a second power socket unit 22b, where the first power socket unit 22a and second power socket unit 22b are of substantially the same design.

The power supply system 30 may further comprise the doubler unit 24 used in conjunction with a cable spur connector assembly 32. The doubler unit 24 is coupled directly with the first power socket unit 22a via a doubler unit electrical connector 40 provided on the doubler unit 24, the doubler unit electrical connector 40 being configured to connect to a compatible power unit electrical connector 42 on the first power socket unit 22a.

In the example shown, the first power socket unit 22a is in electrical communication with the electrical power source 10 via a doubler unit electrical supply connector 44 on the doubler unit 24, the doubler unit electrical supply connector 44 being connected to the compatible connector 16 on the cable 12 in electrical communication with the power source 10.

Additionally, the doubler unit 24 is in electrical communication with the second power unit 22b via a doubler unit electrical spur connector 46, the doubler unit electrical spur connector 46 being connected to a compatible connector 48 on the cable spur assembly 32. A further compatible connector 50 of the cable spur assembly 32 is mated with a power unit electrical connector 42 provided on the second power unit 22b.

Hence the doubler unit 24 is configured to be in electrical connection with the power supply 10, and to distribute the electrical supply to the first power unit 22a and the second power unit 22b.

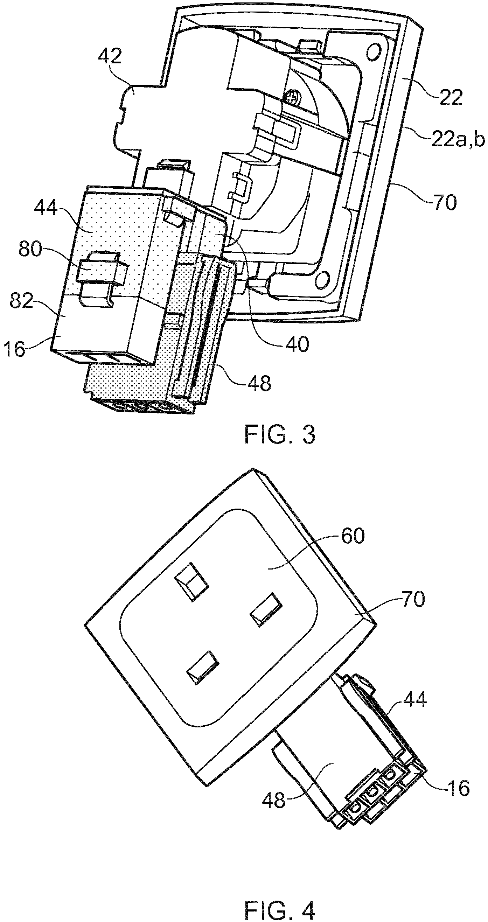

Examples of the power socket assembly are shown in more detail in Figures 3, 4 and Figures 5 to 9.

The power socket unit 22 comprises a device socket 60 for receiving a plug for electrical connection to an electrical device (not shown). In the examples shown, the device socket 60 is a conventional United Kingdom domestic three pin plug, although any socket type may be used in addition, or instead of, such a plug - for example European or USA socket arrangements, or USB ports. On the reverse side of the power socket unit 22, there is provided the single electrical connector 42 for making connection with the supply electrical connector 16 of compatible design to thereby connect the power socket unit 22 (i.e. the device socket 60) to the electrical supply 10. That is to say, the single power socket unit electrical connector 42 is configured to mate with the supply electrical connector 16.

In the example shown, the power socket units 22 have only a single electrical connector 42 on their reverse (i.e. "back" side).

Each power socket unit 22 further comprises a frame 70 which surrounds the device socket 60, and which may be used to fix the power socket unit 22 to the wall panel 18.

As best shown in Figure 2, the power socket unit electrical connector 42 extends away from the body of the power socket unit 22 from a position offset from the back of the frame 70 by a distance greater than the thickness of the wall panel 18. That is to say, connection features of the power socket unit electrical connector 42 for engagement with the doubler connector 24 or supply connector 16 extend substantially parallel to the frame 70, but offset from the reverse (i.e. "wall" side) of the frame 70, by a distance greater than the thickness of the wall 18 to which the socket will be fixed. Thus with the frame 70 attached to a wall panel 18, the power socket unit electrical connector 42 extends through the orifice 20 in the wall panel 18, and there is sufficient room for the doubler unit 24 and electrical connectors 16, 48, 50 to be mated with the power socket unit electrical connector 42 without interfering with the reverse side of the wall 18.

The supply electrical connector 16 is of substantially the same design as the supply electrical connector 50 on the cable spur connector assembly 32. Hence although in Figure 2 the single electrical connector 42 of the power socket unit 22 is shown connected to the supply electrical connector 16 via the doubler unit 24, it may also be mated directly with the supply electrical connector 16 in the same way as the connector 50 is mated directly with the electrical connector 42 of the second power socket unit 22b.

The doubler unit electrical connector 40 is compatible with the power socket unit electrical connector 42, and substantially similar in design to the supply electrical connector 16, and the connector 50 of the cable spur connector assembly 32. That is to say the doubler unit electrical connector 40 is configured to mate with the power socket unit electrical connector 42 of the power socket unit 22. Likewise, the doubler unit electrical spur connector 46 may be substantially similar in design to the supply electrical connector 16 and the supply electrical connector 50 on the spur connector assembly 32.

That is to say, the parts of the respective co-operating, complementary and hence compatible electrical connectors which make the electrical connections i.e. the electrically conductive parts of the connectors, are spaced apart and mounted in a configuration to allow the connectors to mate together to make an electrical connection. The external geometry of the connectors may differ. For example, different clip means may be provided to hold the connectors in place. Put another way, the electrical connector mating parts which make up the connectors may be compatible, to thereby simplify design and manufacture, but the clip fit features provided on each electrical connector to link the bodies of the connector together may be different.

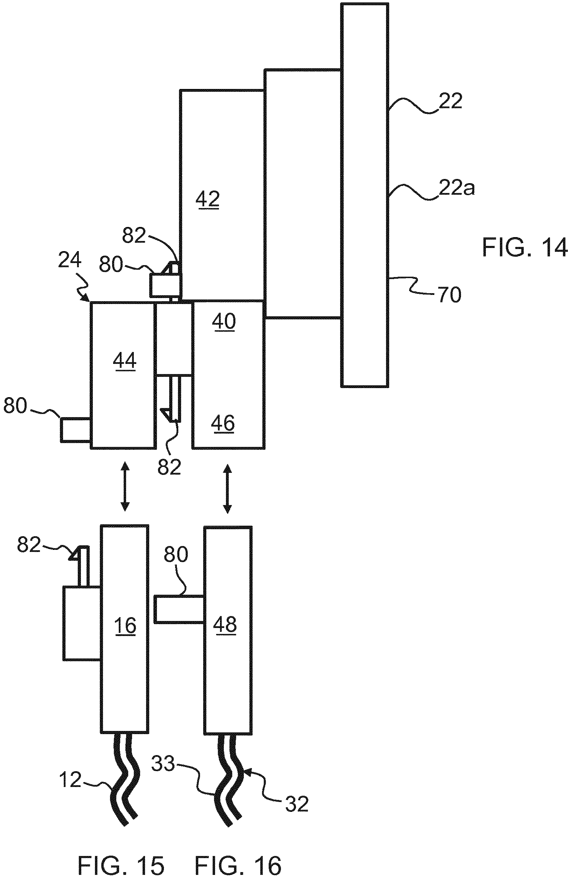

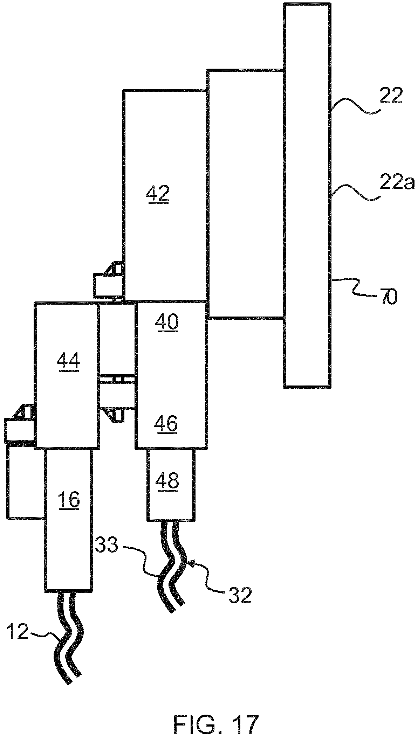

The examples of Figures 3,4 and Figures 5 to 9 are essentially the same as those shown in Figures 1,2 and Figures 12 to 17, albeit with slight physical variations. Common features are referred to using the same reference numerals.

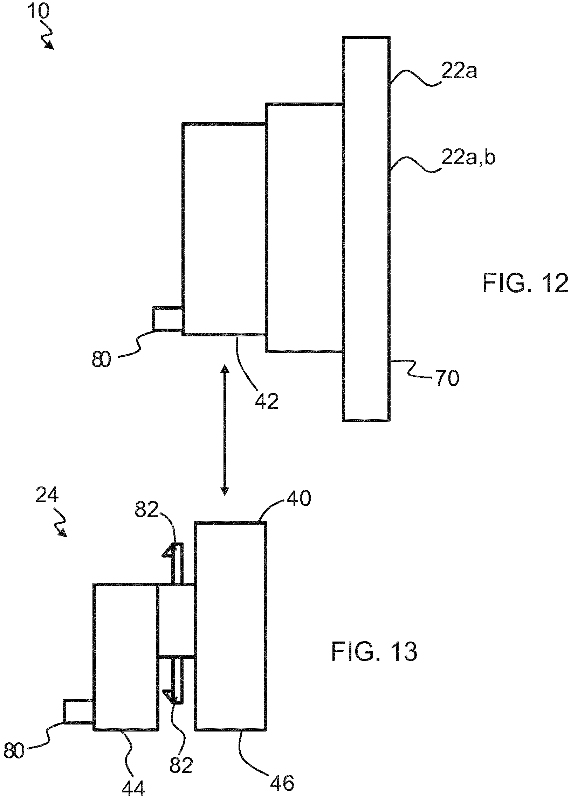

Figures 12 to 17 show a side view of the elements of the power socket assembly, their respective connectors, and how they may be assembled.

The doubler unit electrical connector 40 may comprise a first locking member 82, and the power socket unit electrical connector 42 may comprise a second locking member 80 different to, but compatible with the first locking member 82. The first locking member 82 and second locking member 80 are configured to co-operatively engage and thereby hold the doubler unit electrical connector 40 and the power socket unit electrical connector 42 together to maintain the electrical connection between their electrically conductive parts.

Each first locking member 82 may be provided as a male clip part/member. Each second locking member 80 may be provided as a female clip part/member for receiving the male part/member. These slide together to mate the connectors of the power socket unit, doubler unit and cable and spur connectors to maintain the electrical connection between their electrically conductive parts.

The doubler unit electrical supply connector 44 may comprise a further second locking member 80 and the supply electrical connector 16 may comprise a further first locking member 82 different to, but compatible with the second locking member 80. The first locking member 82 and second locking member 80 are configured to co-operatively engage and thereby hold the doubler unit electrical supply connector 44 and the supply electrical connector 16 together to maintain the electrical connection between their electrically conductive parts.

The doubler unit electrical spur connector 46 may comprise an additional first locking member 82, and the cable spur connector 48 may comprise an additional second locking member 80 different to, but compatible with, the additional first locking member 82. The first locking member 82 and second locking member 80 are configured to co-operatively engage and thereby hold the doubler unit electrical spur connector 46 and the cable spur connector 48 together to maintain the electrical connection between their electrically conductive parts.

Put another way, and as shown in Figures 12 to 17, the doubler unit 24 is provided with a female clip fit part 80 for receiving a compatible male clip fit retaining part 82 on the connector 16 when the connector 16 is engaged with the doubler unit electrical supply connector 44. The doubler unit electrical spur connector 46 may be associated with a male clip fit part 82 which is received in a female connector 80 of the spur connector 48 of the spur connector assembly 32. The power socket unit electrical connector 42 may be provided with a female clip fit receiving part 80 for engagement with a male clip fit member 82 on the doubler unit 24 when the connector 42 is engaged with the doubler unit electrical connector 40.

Hence, with this combination of clip fit features, the connector 16 with male member clip fit feature 82, is compatible with the doubler unit electrical supply connector 44 and female clip fit feature 80. However, the connector 16 with male member clip fit feature 82, is incompatible with the doubler unit electrical spur connector 46 because both have and male member clip fit feature 82 which prevent the connector 16 and connector 46 mating with each other.

In the examples of Figures 2, 12 to 17 the male clip member 82 provided on the doubler unit 24 for engaging with the female clip member 80 of the spur connector 48 is provided between the doubler unit electrical supply connector 44 and the doubler unit electrical spur connector 46.

In the examples of Figures 3,4 and Figures 5 to 9 the male clip member 82 provided on the doubler unit 24 for engaging with the female clip member 80 of the spur connector 48 is provided on a face of the doubler unit 24 opposite and facing the rear of the frame 70.

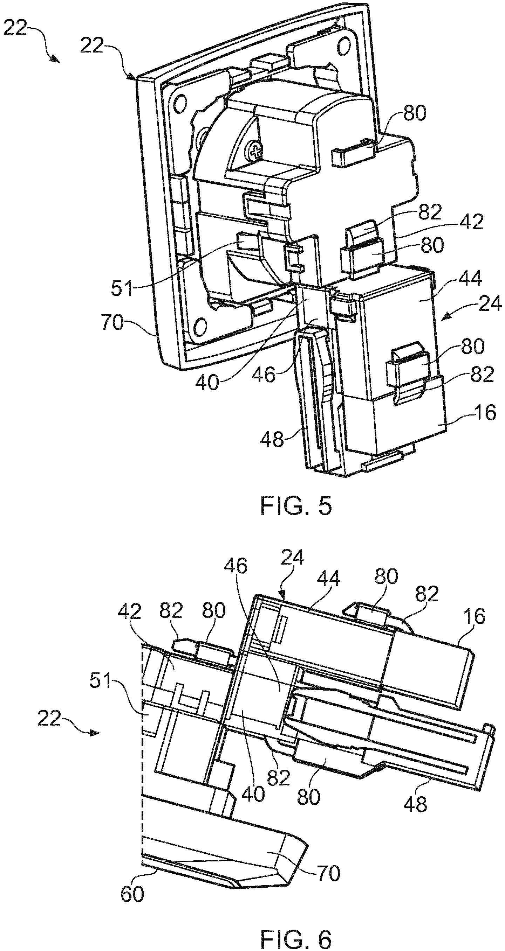

As shown in Figures 5 to 9, the housing of the power socket unit 22 may be provided with an anchor feature 51 for engagement with an arm 53 of a cover 55. The arm 53 has a slot 55 for engagement with the anchor feature 51 to hold the cover 55 in place over the clip features 80, 82.

Put another way, the power socket assembly further comprises an anchor feature 51 provided on the power socket unit 22 to hold a cover 55 onto the power socket unit 22. The cover 55 has an arm 53 with a slot 57 for detachable engagement with the anchor feature 51.

In the example shown, the housing is provided with two anchor features 51, one on either side of the power socket unit housing, and the cover 55 is provided with two arms 53, with a slot 57 for engagement with each of anchor features 51.

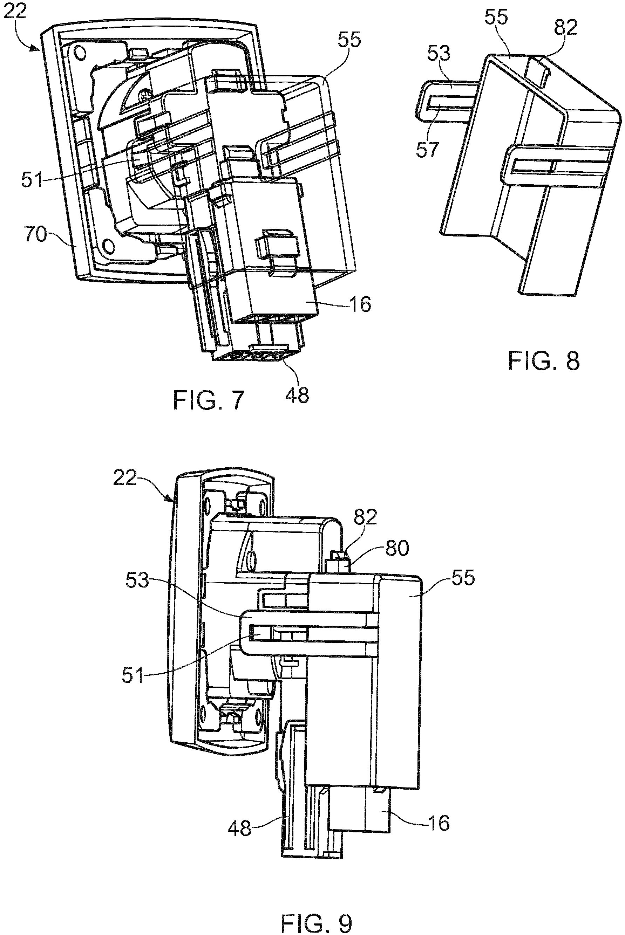

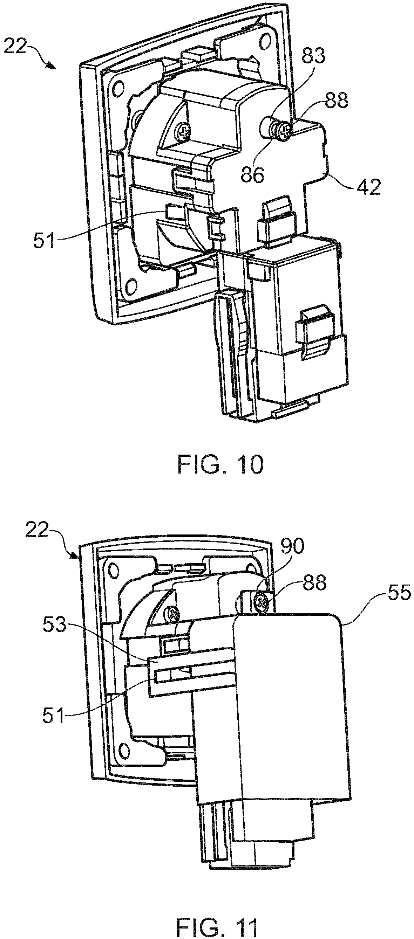

An alternative arrangement is shown in Figures 10, 11. The alternative arrangement is similar to that shown in Figures 7 to 9. However, instead of female and male clip features 80, 82 for assisting with holding the back cover 55 in place on the rear wall of the power socket unit 22, the back cover may be screwed in place.

To this end a boss 83, which may also be considered to be an "anchor feature", may be provided on the rear wall of the power socket unit connector 42 in addition to, or instead of, the anchor feature 51 on the side(s) of the power socket unit housing and associated arm(s) 53 on the cover 55. The boss 83 extends in a direction away from the main body of the power socket unit connector 42. The boss 83 may comprise a threaded hole 86 for receiving a screw 88, as shown in Figure 10. As shown in Figure 11, the back cover 55 of this example is provided with a mounting region 90 with an aperture through which the screw 88 may pass to enter the threaded hole 86 so that the screw may clamp down on the mounting region 90 to hold the back cover in place on the back of the power socket unit connector 42.

Put another way there may be provided an anchor feature 83 provided on the power socket unit 22, 22a, 22b, a cover 55 with a mounting region 90, and a fixing means 88, wherein the fixing means 88 is provided between the anchor feature 83 and mounting region 90 to thereby hold the cover 55 onto the power socket unit 22, 22a, 22b. The fixing mean 88 may be a screw or any other suitable means for joining the anchor feature 83 and mounting region 90.

In both examples, the cover 55 provides impact protection to the rear of the power socket unit 22, as well as preventing accidental disconnection of the electrical connections.

The doubler unit electrical spur connector 46 provides an electrical connection with the power socket unit connector 42 of the second power socket unit 22b via the cable spur connector assembly 32. The cable spur connector assembly 32 comprises a cable 33, with a cable spur connector 48, 50 at either end. One of the cable spur connectors 48 is configured to mate with the doubler unit electrical spur connector 46 and the other cable spur connector 50 is configured to mate with the single power socket unit connector 42 of the second power socket unit 22b.

Put another way, the cable spur connector assembly 32 may comprise a cable 33 with a cable spur connector 48, 50 at either end. One of the cable spur connectors 48 configured to mate with the doubler unit electrical spur connector 46. The other cable spur connector 50 configured to mate with the power socket unit connector 42 of the further power socket unit 22b, to thereby provide an electrical connection between the power socket units 22a, 22b.

The cable spur connector 48 is provided with a female member clip fit feature 80, so is compatible with the doubler unit electrical spur connector 46 which is provided with a male member clip fit feature 82.

The cable spur connector 50 is provided with a male member clip fit feature 82, so is compatible with the power socket unit connector 42 of the second power socket unit 22b which is provided with a female member clip fit feature 80.

All of the connectors rely on a clip fit feature using the locking members 80, 82 as described above. The system does not require any hard wiring (e.g. screw clamping of cables into connectors) to connect the power socket unit, doubler unit, cable spur connector and supply cable.

In this way there is provided an electrical connection between the first power socket unit 22a and the second power socket unit 22b. With the first power socket unit 22a connected to the electrical supply 10 via the doubler unit and the cable assembly 12, the second power socket unit 22b is therefore also connected to the power source 10.

Although the examples shown in the drawings and described above have a single device socket 60 for receiving a plug via an electrical connection to an electrical device, each power socket unit 22 may additionally or alternatively be provided with a second or more device sockets 60 for receiving a plug for electrical connection to electrical devices.

Hence there is provided a power socket assembly which is inherently more compact than designs of the related art, uses less raw materials in its manufacture, and is lighter. In the technical field of mobile homes, this design is thus highly desirable compared to examples of the related art having larger and heavier constructions.

Additionally the clip fit features, made possible by the connectors, means no hard wiring of parts is required, which lessens the need for electricians to attach the power socket units to the power source.

The doubler unit is attached only when needed, and is easy to retrofit to expand and rewire, refurbish and upgrade the system inside the mobile home.

Also as fewer power socket unit designs are required in order to achieve the power socket assembly and system, the arrangements of the present invention will therefore be less expensive and easier to produce than those of the related art.

The apparatus, assembly and system of the present invention is also beneficial as it allows for a very straightforward power socket unit 22 installation. Once an aperture/orifice 20 has been provided in the receiving wall panel 18, the power socket unit 22, with or without a doubler unit 24, can be connected into the wiring arrangement easily and quickly using the connectors hereinbefore described. Either the connector can be passed through the aperture 20 for connection to the socket unit 22 prior to the socket unit 22 being fitted in the aperture 20 and fixed to the wall 18, or the socket unit 22 can be fitted in the aperture 20 and fixed to the wall 18 prior to it being connected into the wiring arrangement. This is advantageous relative to examples of the related art as it enables quick and easy installation, and obviates the need for a qualified electrician to complete the circuit.

The provision of a first locking part and a second locking part to form the clip fit arrangement also provides an advantage of simplifying assembly by making it easier for a fitter to identify which connectors should be fitted together according to a predetermined design.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A power socket assembly for use in mobile home comprising
a power socket unit (22, 22a, 22b) provided with :
a device socket (60) for receiving a plug for electrical connection to an electrical device;
an electrical connector (42) for making connection with a supply electrical connector (16, 50) of compatible design to thereby connect the power socket unit (22, 22a, 22b) to an electrical supply (10);
the power socket unit electrical connector (42) being configured to mate with the supply electrical connector (16); and
a doubler unit (24) having :
a doubler unit electrical connector (40) compatible with the power socket unit electrical connector (42),
the doubler unit electrical connector (40) being configured to mate with the power socket unit electrical connector (42);
a doubler unit electrical supply connector (44) for mating with the supply electrical connector (16); and
a doubler unit electrical spur connector (46), for electrical connection with the power socket unit connector (42) of a further power socket unit (22b).

2. A power socket assembly as claimed in claim 1 wherein :
the doubler unit electrical connector (40) comprises a first locking member (82);
the power socket unit electrical connector (42) comprises a second locking member (80) different to, but compatible with the first locking member (82); and
the first locking member (82) and second locking member (80) are configured to co-operatively engage and thereby hold the doubler unit electrical connector (40) and the power socket unit electrical connector (42) together.

3. A power socket assembly as claimed in claim 1 or claim 2 wherein :
the doubler unit electrical supply connector (44) comprises a further second locking member (80); and
the supply electrical connector (16) comprises a further first locking member (82) different to, but compatible with the second locking member (80); and
the first locking member (82) and second locking member (80) are configured to co-operatively engage and thereby hold the doubler unit electrical supply connector (44) and the supply electrical connector (16) together.

4. A power socket assembly as claimed in any one of claims 1 to 3 further comprising
a cable spur connector assembly (32) comprising :
a cable (33) with a cable spur connector (48, 50) at either end,
one of the cable spur connectors (48) configured to mate with the doubler unit electrical spur connector (46);
the other cable spur connector (50) configured to mate with the power socket unit connector (42) of the further power socket unit (22b),
to thereby provide an electrical connection between the power socket units (22a, 22b).

5. A power socket assembly as claimed in claim 4 wherein :
the doubler unit electrical spur connector (46) comprises an additional first locking member (82); and
the cable spur connector (48) comprises an additional second locking member (80) different to, but compatible with the first locking member (82); and
the first locking member (82) and second locking member (80) are configured to co-operatively engage and thereby hold the doubler unit electrical spur connector (46) and the cable spur connector (48) together.

6. A power socket assembly as claimed in any one of claims 1 to 5 wherein
the power socket units (22a, 22b) are of substantially the same design.

7. A power socket assembly as claimed in any one of the preceding claims wherein
an electrical cable (12) provides an electrical connection between the supply electrical connector (16) and the electrical supply (10).

8. A power socket assembly as claimed in any one of the preceding claims wherein
the power socket unit (22, 22a, 22b) further comprises :
a frame (70) which surrounds the device socket (60) for fixing the power socket unit (22, 22a, 22b) to a wall (18);
the power socket unit electrical connector (42) extends away from the body of the power socket unit (22, 22a, 22b) from a position offset from the frame (70) by a distance greater than the thickness of the wall (18).

9. A power socket assembly as claimed in any one claims 1 to 8 further comprising:
an anchor feature (51) provided on the power socket unit (22, 22a, 22b);
a cover (55) having an arm (53) with a slot (57)
for detachable engagement with the anchor feature (51),
to thereby hold the cover (55) onto the power socket unit (22, 22a, 22b).

10. A power socket assembly as claimed in any one claims 1 to 8 further comprising:
an anchor feature (83) provided on the power socket unit (22, 22a, 22b);
a cover (55) with a mounting region (90); and
a fixing means (88) provided between the anchor feature (83) and mounting region (90) to thereby hold the cover (55) onto the power socket unit (22, 22a, 22b).
